# EUROPEAN PATENT SPECIFICATION

(11) **EP 2 217 485 B1**
(45) Date of publication and mention of the grant of the patent: **02.05.2012**
(21) Application number: 07852237.2
(22) Date of filing: 10.12.2007
(51) Int. Cl.: B62D 21/15, B60R 19/26

(54) **A STRUCTURAL BEAM FOR A VEHICLE AND A METHOD OF FORMING A STRUCTURAL BEAM FOR A VEHICLE**
STRUKTURTRÄGER FÜR EIN FAHRZEUG UND VERFAHREN ZUM BILDEN EINES STRUKTURTRÄGERS FÜR EIN FAHRZEUG
POUTRE STRUCTURELLE POUR VEHICULE ET PROCEDE DE FORMATION D'UNE POUTRE STRUCTURELLE POUR VEHICULE

(43) Date of publication of application: 18.08.2010
(73) Proprietor: Autoliv Development AB, 447 83 Vårgårda (SE)
(72) Inventor: PIPKORN, Bengt, S-433 70 Sävedalen (SE)
(74) Representative: Beattie, Alex Thomas Stewart
(86) International application number: PCT/SE2007/050965
(87) International publication number: WO 2009/075618

(56) References cited:
- EP-A2- 1 400 436
- WO-A1-2007/059934
- DE-A1- 19 963 068
- US-A- 5 845 937
- US-A- 5 908 204

## Description

### Description of Invention

The present invention relates to a beam configured to be reinforced by an internal air sack.

Document DE 19963068 discloses the preambles of the independent claims.

Beams used in the construction of vehicles must be sufficiently strong to resist unwanted deformation during an accident. However, there is also a requirement for the beams to be as light as possible (to improve fuel efficiency and/or the maximum speed of the vehicle). These requirements are generally considered contradictory as the strength requirement dictates the use of beams constructed out of thick material and the weight requirement dictates the use of beams constructed out of thin material.

Accordingly, it is known to provide a hollow beam for use in the construction of a vehicle. To increase the buckle strength of the beam a gas source is provided within a hollow cavity of the beam. In the event of an accident, the gas source is activated and the gas pressure within the hollow cavity of the beam increases to support the beam internally. Thus, it is possible to utilise a beam in the construction of a vehicle which has comparatively thin walls but which has sufficient strength during an accident.

Beams used in the construction of vehicles are prone to corrosion and it is preferable to treat beams of this type by coating the beams with an anti-corrosion substance. In order to coat a beam it is necessary to provide apertures through a wall of the beam to allow an internal surface of the beam to be coated.

Apertures in the wall of a beam allow any gas released into the hollow cavity of such a beam to escape. As such, it is not possible to pressurise the internal cavity of the beam to increase the strength thereof

It is an object of the present invention to ameliorate the problems associated with the prior art.

Accordingly, one aspect of the present invention provides a structural beam for a vehicle comprising: a housing having an internal hollow cavity; and an inflatable sack configured to inflate within the internal hollow cavity of the housing so as to support the housing at least partially when inflated; wherein the housing defines one or more apertures through an entire depth thereof, the or each aperture being sized such that when the sack is inflated with a fluid to a pressure between about 4MPa and about 8MPa, a portion of the sack which protrudes through the or each aperture has a protrusion depth less than or equal to about half the smallest lateral dimension of the aperture.

Preferably, the smallest lateral dimension of the or each aperture is greater than or equal to about 10mm.

Advantageously, the smallest lateral dimension of the or each aperture is less than or equal to about 30mm.

Conveniently, the or each aperture is sized such that when the sack is inflated with a fluid to a pressure between about 5MPa and about 8MPa, a portion of the sack which protrudes through the or each aperture has a protrusion depth less than or equal to about half the smallest lateral dimension of the aperture.

Preferably, the or each aperture is sized such that when the sack is inflated with a fluid to a pressure of about 5MPa a portion of the sack which protrudes through the or each aperture has a protrusion depth less than or equal to about half the smallest lateral dimension of the aperture.

Conveniently, the sack is constructed out of a polymer.

Advantageously, the sack is formed inside the housing by injection moulding or blow moulding.

Preferably, the beam is in combination with a gas source adapted to inflate the sack in less than 10ms.

Preferably, the beam is in combination with a gas source adapted to inflate the sack in less than 6ms.

Conveniently, the sack is configured to provide support for the beam in an axial direction.

Advantageously, the sack is adapted to be plastically deformable.

Another aspect of the invention provides a method of forming a structural beam for a vehicle comprising the steps of: providing a housing having an internal hollow cavity; and providing an inflatable sack configured to inflate within the internal hollow cavity of the housing so as to support the housing at least partially when inflated; wherein the housing defines one or more apertures through an entire depth thereof, the or each aperture being sized such that when the sack is inflated with a fluid to a pressure between about 4MPa and about 8MPa a portion of the sack which protrudes through the or each aperture has a protrusion depth less than or equal to about half the smallest lateral dimension of the aperture.

Preferably, the step of providing a housing comprises providing a housing wherein the smallest lateral dimension of the or each aperture is greater than or equal to about 10mm.

Advantageously, the step of providing a housing comprises providing a housing wherein the smallest lateral dimension of the or each aperture is less than or equal to about 30mm.

Conveniently, the step of providing a housing comprises providing a housing wherein the or each aperture is sized such that when the sack is inflated with a fluid to a pressure between about 5MPa and about 8MPa, a portion of the sack which protrudes through the or each aperture has a protrusion depth less than or equal to about half the smallest lateral dimension of the aperture.

Preferably, the step of providing a housing comprises providing a housing wherein the or each aperture is sized such that when the sack is inflated with a fluid to a pressure of about 5MPa, a portion of the sack which protrudes through the or each aperture has a protrusion depth less than or equal to about half the smallest lateral dimension of the aperture.

Conveniently, the step of providing a sack comprises providing a sack is constructed out of a polymer.

Advantageously, the step of providing a sack comprises forming the sack inside the housing by injection moulding or blow moulding.

Preferably, the method further comprises the step of providing a gas source which is adapted to inflate the sack in less than 10ms.

Preferably, the method further comprises the step of providing a gas source which is adapted to inflate the sack in less than 6ms.

Conveniently, the step of providing a sack comprises providing a sack configured to provide support for the beam in an axial direction.

Advantageously, the step of proving a sack comprises providing a sack which is adapted to be plastically deformable.

The present invention will be described, by way of example, with reference to the accompanying drawings in which:
Figure 1 shows an embodiment of the invention in a first configuration;
Figure 2 shows an embodiment of the invention in a second configuration;
Figure 3 shows apertures utilised in an embodiment of the present invention; and
Figure 4 shows a sack protruding from an aperture.

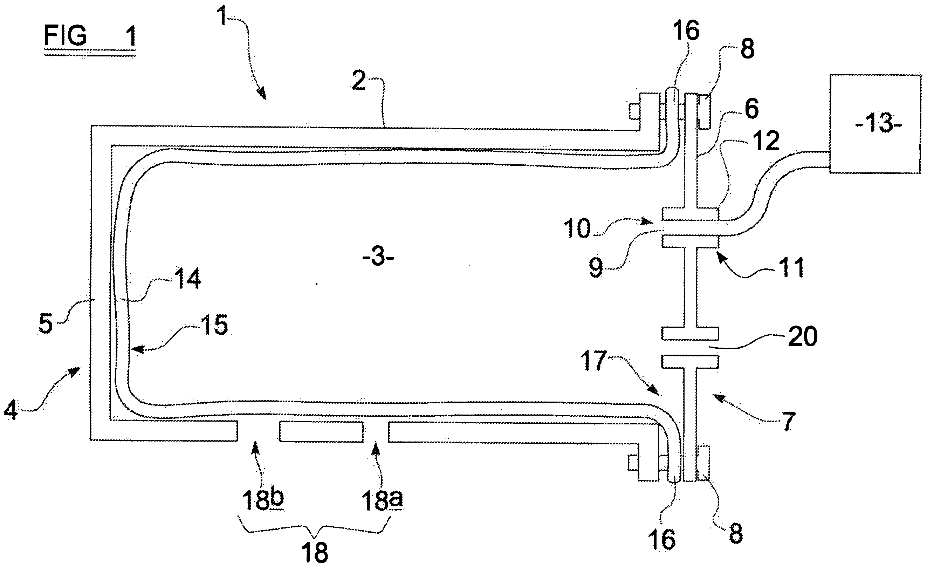

A beam 1 for use in the construction of a vehicle is shown in figure 1 in cross-section. The beam comprises an outer wall 2. The outer wall 2 forms a generally open ended tube with a central hollow cavity 3. A first end 4 of the outer wall 2 is closed by an end wall 5.

A base plate 6 is provided at a second end 7 of the outer wall 2 (the first 4 and second 7 ends of the outer wall 2 oppose each other across a length of the beam 1). The base plate 6 is attached to the second end 7 of the outer wall 2 by a plurality of bolts 8 (although other attachment arrangements are envisaged).

The base plate 6 defines a gas inlet aperture 9 therethrough. The gas inlet aperture 9 has a first end 10 open to the central hollow cavity 3 of the beam 1 and a second end 11 open to the exterior of the beam 1. Preferably, an attachment arrangement 12 is provided at the second end 11 of the gas inlet aperture 9; the attachment arrangement 12 is configured for connection to a gas generator 13 which may be a source of compressed gas, a pyrotechnic gas generator or similar such device.

An internal gas sack 14 is provided within the hollow cavity 3 of the beam 1. The gas sack 14 is attached to beam 1 such that the gas inlet aperture 9 of the base plate 6 opens at its first end 10 into the sack 14.

The gas sack 14 comprises a sock which is substantially sealed at a first end 15 and has a peripheral flange 16 at a second open end thereof 17. A diameter of the sack 14 is equal to or greater than an internal dimension of the hollow cavity 3 of the beam 1 such that when the sack is inflated, the sack 14 supports at least part of the beam 1 to increase the buckle strength of the beam 1. A length of the sack 14 may be such that the first end 15 of the sack 14 presses against the end wall 5 at the first end 4 for the outer wall 4 when the sack is inflated in order to at least partially support the beam and increase the buckle strength thereof.

The peripheral flange 16 is configured to be secured between the base plate 6 and the outer wall 2 of the beam 1 in a substantially gas-tight seal. As such, the gas sack 14 is substantially sealed at the second end 17 thereof around the gas inlet aperture 9.

As such, when gas is provided through the gas inlet aperture 9, the sack 14 will inflate.

The sack 14 is preferably constructed out of a material which is adapted to be inflated by a gas (or other fluid). The sack 14 may have a certain degree of leakage; however, such leakage should be sufficiently low to ensure that the gas sack 14 at least partially supports beam 1. The sack 14 is preferably constructed out of a polymer. The gas sack 14 may be injection moulded or blow-moulded inside the hollow cavity 3 of the beam 1. Textile materials may not be suitable for the construction of the sack if the pressure which the sack 14 must withstand is too great.

Normally, the beam 1 is in a first configuration, as shown in figure 1 - with the gas sack 14 deflated (it will be understood that the shape of the sack 14 has been exaggerated in figure 1 for the purposes of illustration; in reality, the sack 14 may substantially abut the entire internal surface of the outer wall 2 when the sack 14 is deflated) - the pressure inside the sack 14 in this configuration is preferably approximately atmospheric pressure.

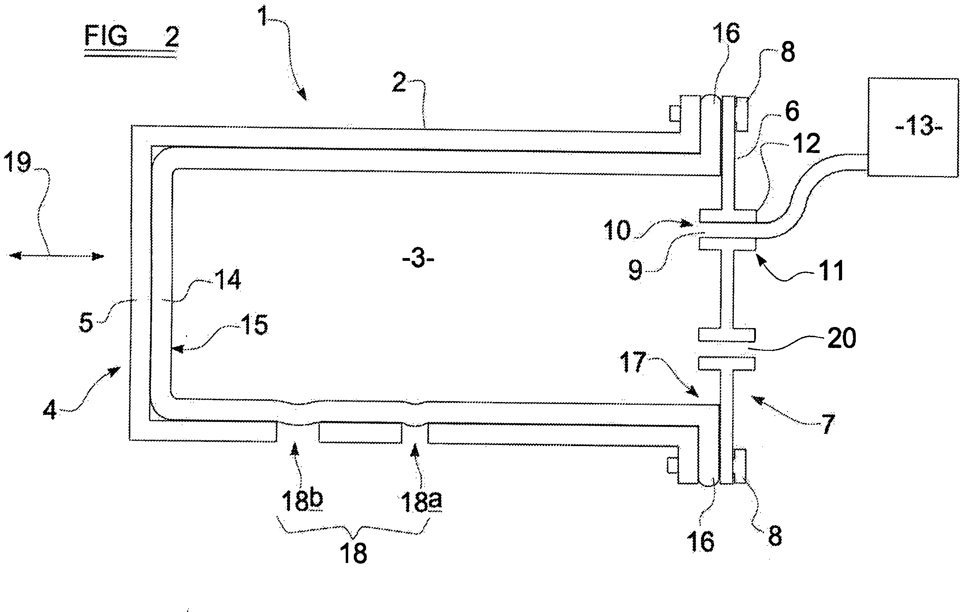

Thus, during an accident the gas sack 14 can be inflated to increase the buckle strength of the beam 1. The shape of the gas sack 14 can be adapted such that the gas sack 14 will increase the buckle strength of the beam 1 with respect to impacts from a particular direction (by applying a force against an internal surface of the outer wall 2 of the beam 1). During an accident the beam 1 is in a second configuration, as shown in figure 2 - with the gas sack 14 inflated. Preferably, in the second configuration the inflated gas sack 14 increases the buckle strength of the beam 1 to forces in an axial direction (as indicated in figure 2 by reference numeral 19).

The sack 14 is preferably capable of plastic deformation during an accident such that at least a portion of the force of the accident may be absorbed by the deformation of the sack 14 if the beam 1 deforms or buckles.

When the sack 14 is inflated, the gas pressure inside the sack 14 may be 4MPa or greater, and indeed may be greater than or equal to 5MPa. The pressure inside the sack 14 is preferably less than 8MPa. The sack 14 must inflate quickly enough in the event of a trigger activated by an accident event, to ensure that the sack 14 at least partially supports the beam 1 during the accident. As such, the gas generator 13 and sack 14 are preferably configured to allow the gas sack 14 to inflate, at least partially (but sufficiently to apply a force to at least part of an internal surface of the hollow cavity 3 of the beam 1) in 10ms or less. Advantageously the sack 14 is configured to inflate in this manner in 9ms or less. Conveniently, the sack 14 is configured to inflate in this manner in 6ms or less. The sack 14 may fully inflate in this period.

The outer wall 2 of the beam 1 defines one or more apertures 18. The apertures 18 allow a corrosion resistant coating to be applied to the internal hollow cavity 3 of the beam 1.

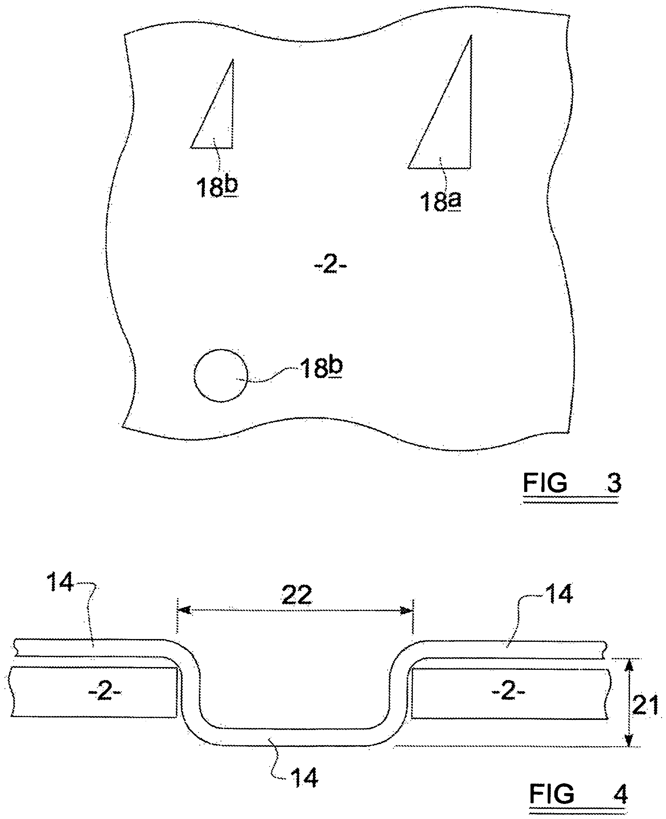

The apertures 18 may, for example, be circular in shape or triangular in shape. Examples of apertures are shown in figure 3.

In an embodiment of the present invention a first 18a and a second 18b set of apertures 18 are provided through an entire depth of the outer wall 2 of the beam 1.

The apertures 18 allow the internal surfaces of the beam 1 to be coated with an anti-corrosion agent or substance.

When the gas sack 14 is inflated, the sack will at least partially support the beam 1, as described above, to increase the buckle strength thereof. However, the sack may inflate so as to protrude through the apertures 18. This increases the likelihood of damage to the sack 14 and may reduce the strengthening effect of the sack 14 on the beam 1. If the protruding sack 14 portions (as shown in figure 4) are damaged or otherwise punctured, then this may allow the gas inside the sack 14 to escape; thus, the strengthening effect of the inflated sack 14 on the beam 1 would be significantly reduced.

Accordingly, at least the second set 18b of apertures 18 preferably have a dimension 22 which is greater than or equal to 10mm; at least the second set 18b of apertures 18 preferably have a dimension 22 which is less than or equal to 30mm. Preferably, a dimension 22 of at least the second set 18b of apertures 18 is greater than or equal to 10mm but less than or equal to 30mm. The sizes of each of the second set 18b of apertures 18 may vary from each other. The dimension 22 discussed above is the smallest lateral dimension of the aperture 18 (ie. the smallest dimension not including depth).

The first set 18a of apertures 18 may be of the same order of size as the second 18b set of apertures 18. The first set 18a of apertures 18 may be sufficiently small such that substantially no portion of the inflated gas sack 14 will protrude therethrough.

At least the second set 18b of apertures 18 are sized such that the protrusion depth is equal to or less than about half of a dimension 22 of the aperture 18. The protrusion depth is measured from an outer surface of the sack 14 which generally abuts an inner surface of the outer wall 2 of the beam 1 to the outer surface of the sack 14 at the maximum extent of the protrusion - as shown in figure 4.

It will be appreciated that the dimensions of the apertures 18 may be selected in order to reduce the length of any protrusions of the inflated gas sack 14 therethough. It will be understood that the dimensions may be at least partially dependent upon the properties of the material used to construct the sack 14: a stiff material may have the desired limited length of protrusion at inflation through apertures 18 which are larger than would be the case for a sack 14 constructed out of a softer material.

The use of a gas sack 14 ensures that there is reduced leakage of gas from the beam at inflation (as the apertures 18 and any cracks (not shown) in the outer wall 2 of the beam 1 will be blocked by the sack 14.

One or more ventilation channels 20 are preferably provided in the outer wall 2 of the beam 1 and/or in the base plate 6. The ventilation channels 20 allow the gas inside the sack 14 to be released after the accident. Accordingly, a valve (not shown) may be fitted to the or each of the channels 20 to prevent gas from escaping during an accident but to allow release after an accident. The valve may be opened by a trigger signal which is activated when (or shortly after) the supply of gas into the sack 14 has ceased.

It will be understood that the outer wall 2 and the base plate 6 form a housing 2,6.

A beam 1 accordingly to an embodiment of the present invention may be utilised as part of a "crash box" of a vehicle; the beam 1 may be a structural beam for a vehicle.

After a beam in accordance with an embodiment of the present invention has been constructed, a visual inspection of the correct fitting of the sack 14 may be carried out by inspecting the sack 14 through one or more of the apertures 18.

When used in this specification and claims, the terms "comprises" and "comprising" and variations thereof mean that the specified features, steps or integers are included. The terms are not to be interpreted to exclude the presence of other features, steps or components.

## Claims

1. A structural beam (1) for a vehicle comprising:
a housing (2,6) having an internal hollow cavity (3); and
an inflatable sack (14) configured to inflate within the internal hollow cavity (3) of the housing (2,6) so as to support the housing (2,6) at least partially when inflated; **characterized in that**
the housing (2,6) defines one or more apertures (18) through an entire depth thereof, the or each aperture (18) being sized such that when the sack (14) is inflated with a fluid to a pressure between about 4MPa and about 8MPa, a portion of the sack (14) which protrudes through the or each aperture (18) has a protrusion depth less than or equal to about half the smallest lateral dimension of the aperture (18).

2. A beam (1) according to claim 1, wherein the smallest lateral dimension of the or each aperture (18) is greater than or equal to about 10mm.

3. A beam (1) according to any preceding claim, wherein the smallest lateral dimension of the or each aperture (18) is less than or equal to about 30mm.

4. A beam (1) according to any preceding claim, wherein the or each aperture (18) is sized such that when the sack (14) is inflated with a fluid to a pressure between about 5MPa and about 8MPa, a portion of the sack (14) which protrudes through the or each aperture (18) has a protrusion depth less than or equal to about half the smallest lateral dimension of the aperture (18).

5. A beam (1) according to claim 4, wherein the or each aperture (18) is sized such that when the sack (14) is inflated with a fluid to a pressure of about 5MPa a portion of the sack (14) which protrudes through the or each aperture (18) has a protrusion depth less than or equal to about half the smallest lateral dimension of the aperture (18).

6. A beam (1) according to any preceding claim, wherein the sack (14) is constructed out of a polymer.

7. A beam (1) according to claim 6, wherein the sack (14) is formed inside the housing (2,6) by injection moulding or blow moulding.

8. A beam (1) according to any preceding claim, in combination with a gas source (13) adapted to inflate the sack (14) in less than 10ms.

9. A beam (1) in combination with a gas source (13) according to claim 8 adapted to inflate the sack (14) in less than 6ms.

10. A beam (1) according to any preceding claim, wherein the sack (14) is configured to provide support for the beam (1) in an axial direction.

11. A beam (1) according to any preceding claim, wherein the sack (14) is adapted to be plastically deformable.

12. A method of forming a structural beam (1) for a vehicle comprising the steps of:
providing a housing (2,6) having an internal hollow cavity (3); and
providing an inflatable sack (14) configured to inflate within the internal hollow cavity (3) of the housing (2,6) so as to support thee housing (2,6) at least partially when inflated; **characterized in that**
the housing (2,6) defines one or more apertures (18) through an entire depth thereof, the or each aperture (18) being sized such that when the sack (14) is inflated with a fluid to a pressure between about 4MPa and about 8MPa a portion of the sack (14) which protrudes through the or each aperture (18) has a protrusion depth less than or equal to about half the smallest lateral dimension of the aperture (18).

13. A method according to claim 12, wherein the step of providing a housing (2,6) comprises providing a housing (2,6) wherein the smallest lateral dimension of the or each aperture (18) is greater than or equal to about 10mm.

14. A method according to claim 12 or 13, wherein the step of providing a housing (2,6) comprises providing a housing (2,6) wherein the smallest lateral dimension of the or each aperture (18) is less than or equal to about 30mm.

15. A method according to any one of claims 12 to 14, wherein the step of providing a housing (2,6) comprises providing a housing (2,6) wherein the or each aperture (18) is sized such that when the sack (14) is inflated with a fluid to a pressure between about 5MPa and about 8MPa, a portion of the sack (14) which protrudes through the or each aperture (18) has a protrusion depth less than or equal to about half the smallest lateral dimension of the aperture (18).

## Patentansprüche

1. Strukturträger (1) für ein Fahrzeug, umfassend:
ein Gehäuse (2, 6) mit einem inneren Hohlraum (3); und
einen aufblasbaren Sack (14), der dazu konfiguriert ist, sich in dem inneren Hohlraum (3) des Gehäuses (2, 6) aufzublasen, um das Gehäuse (2, 6) zumindest teilweise zu stützen, wenn er aufgeblasen ist;
**dadurch gekennzeichnet, dass**
das Gehäuse (2, 6) eine oder mehrere Öffnungen (18) durch seine gesamte Tiefe hindurch begrenzt, wobei die oder jede Öffnung (18) so dimensioniert ist, dass, wenn der Sack (14) mit einem Fluid auf einen Druck von ungefähr 4 MPa bis ungefähr 8 MPa aufgeblasen wird, ein Teil des Sacks (14), der durch die oder jede Öffnung (18) vorsteht, eine Vorsprungstiefe hat, die kleiner als oder gleich ungefähr der Hälfte der kleinsten seitlichen Dimension der Öffnung (18) ist.

2. Träger (1) nach Anspruch 1, wobei die kleinste seitliche Dimension der oder jeder Öffnung (18) größer als oder gleich ungefähr 10 mm ist.

3. Träger (1) nach irgendeinem vorhergehenden Anspruch, wobei die kleinste seitliche Dimension der oder jeder Öffnung (18) kleiner als oder gleich ungefähr 30 mm ist.

4. Träger (1) nach irgendeinem vorhergehenden Anspruch, wobei die oder jede Öffnung (18) so dimensioniert ist, dass, wenn der Sack (14) mit einem Fluid auf einen Druck von ungefähr 5 MPa bis ungefähr 8 MPa aufgeblasen wird, ein Teil des Sacks (14), der durch die oder jede Öffnung (18) vorsteht, eine Vorsprungstiefe hat, die kleiner als oder gleich ungefähr der Hälfte der kleinsten seitlichen Dimension der Öffnung (18) ist.

5. Träger (1) nach Anspruch 4, wobei die oder jede Öffnung (18) so dimensioniert ist, dass, wenn der Sack (14) mit einem Fluid auf einen Druck von ungefähr 5 MPa aufgeblasen wird, ein Teil des Sacks (14), der durch die oder jede Öffnung (18) vorsteht, eine Vorsprungstiefe hat, die kleiner als oder gleich ungefähr der Hälfte der kleinsten seitlichen Dimension der Öffnung (18) ist.

6. Träger (1) nach irgendeinem vorhergehenden Anspruch, wobei der Sack (14) aus einem Polymer hergestellt ist.

7. Träger (1) nach Anspruch 6, wobei der Sack (14) innerhalb des Gehäuses (2, 6) durch Spritzgießen oder Blasformen ausgebildet ist.

8. Träger (1) nach irgendeinem vorhergehenden Anspruch in Kombination mit einer Gasquelle (13), die dazu ausgelegt ist, den Sack (14) in weniger als 10 ms aufzublasen.

9. Träger (1) in Kombination mit einer Gasquelle (13) nach Anspruch 8, die dazu ausgelegt ist, den Sack (14) in weniger als 6 ms aufzublasen.

10. Träger (1) nach irgendeinem vorhergehenden Anspruch, wobei der Sack (14) dazu konfiguriert ist, Unterstützung für den Träger (1) in axialer Richtung vorzusehen.

11. Träger (1) nach irgendeinem vorhergehenden Anspruch, wobei der Sack (14) dazu ausgelegt ist, plastisch verformbar zu sein.

12. Verfahren zur Ausbildung eines Strukturträgers (1) für ein Fahrzeug, umfassend die folgenden Schritte:
Vorsehen eines Gehäuses (2, 6) mit einem inneren Hohlraum (3); und
Vorsehen eines aufblasbaren Sacks (14), der dazu konfiguriert ist, sich in dem inneren Hohlraum (3) des Gehäuses (2, 6) aufzublasen, um das Gehäuse (2, 6) zumindest teilweise zu stützen, wenn er aufgeblasen ist;
**dadurch gekennzeichnet, dass**
das Gehäuse (2, 6) eine oder mehrere Öffnungen (18) durch seine gesamte Tiefe hindurch begrenzt, wobei die oder jede Öffnung (18) so dimensioniert ist, dass, wenn der Sack (14) mit einem Fluid auf einen Druck von ungefähr 4 MPa bis ungefähr 8 MPa aufgeblasen wird, ein Teil des Sacks (14), der durch die oder jede Öffnung (18) vorsteht, eine Vorsprungstiefe hat, die kleiner als oder gleich ungefähr der Hälfte der kleinsten seitlichen Dimension der Öffnung (18) ist.

13. Verfahren nach Anspruch 12, wobei der Schritt des Bereitstellens eines Gehäuses (2, 6) das Bereitstellen eines Gehäuses (2, 6) umfasst, bei dem die kleinste seitliche Dimension der oder jeder Öffnung (18) größer als oder gleich ungefähr 10 mm ist.

14. Verfahren nach Anspruch 12 oder 13, wobei der Schritt des Bereitstellens eines Gehäuses (2, 6) das Bereitstellen eines Gehäuses (2, 6) umfasst, bei dem die kleinste seitliche Dimension der oder jeder Öffnung (18) kleiner als oder gleich ungefähr 30 mm ist.

15. Verfahren nach irgendeinem der Ansprüche 12 bis 14, wobei der Schritt des Bereitstellens eines Gehäuses (2, 6) das Bereitstellen eines Gehäuses (2, 6) umfasst, bei dem die oder jede Öffnung (18) so dimensioniert ist, dass, wenn der Sack (14) mit einem Fluid auf einen Druck von ungefähr 5 MPa bis ungefähr 8 MPa aufgeblasen wird, ein Teil des Sacks (14), der durch die oder jede Öffnung (18) vorsteht, eine Vorsprungstiefe hat, die kleiner als oder gleich ungefähr der Hälfte der kleinsten seitlichen Dimension der Öffnung (18) ist.

## Revendications

1. Une poutre structurelle (1) pour véhicule se composant de ce qui suit :
un logement (2, 6) comportant une cavité creuse interne (3) ; et un sac gonflable (14) conçu pour gonfler dans la cavité creuse interne (3) du logement (2, 6) de manière à soutenir le logement (2, 6) au moins en partie lorsqu'il est gonflé, **se caractérisant par** ce qui suit :
le logement (2, 6) définit une ou plusieurs ouvertures (18) sur toute sa profondeur, la ou les ouvertures (18) étant dimensionnées de sorte que, lorsque le sac (14) est gonflé par un fluide à une pression comprise entre environ 4 MPa et environ 8 MPa, une partie du sac (14) qui dépasse à travers la ou les ouvertures (18) ait une profondeur de saillie inférieure ou égale à environ la moitié de la plus petite dimension latérale de l'ouverture (18).

2. Une poutre (1) selon la revendication 1, dans laquelle la plus petite dimension latérale de la ou des ouvertures (18) est supérieure ou égale à environ 10 mm.

3. Une poutre (1) selon n'importe laquelle des revendications précédentes, dans laquelle la plus petite dimension latérale de la ou des ouvertures (18) est inférieure ou égale à environ 30 mm.

4. Une poutre (1) selon n'importe laquelle des revendications précédentes, dans laquelle la ou chaque ouverture (18) possède des dimensions telles que lorsque le sac (14) est gonflé avec un fluide à une pression entre environ 5 MPa et environ 8 MPa, une partie du sac (14) qui dépasse de la ou des ouvertures (18) possède une profondeur de saillie inférieure ou égale à environ la moitié de la plus petite dimension de l'ouverture (18).

5. Une poutre (1) selon la revendication 4, dans laquelle la ou chaque ouverture (18) possède des dimensions telles que lorsque le sac (14) est gonflé avec un fluide à une pression d'environ 5 MPa, une partie du sac (14) qui dépasse de la ou des ouvertures (18) possède une profondeur de saillie inférieure ou égale à environ la moitié de la plus petite dimension de l'ouverture (18).

6. Une poutre (1) selon n'importe laquelle des revendications précédentes, dans laquelle le sac (14) est en polymère.

7. Une poutre (1) selon la revendication 6, dans laquelle le sac (14) est formé à l'intérieur du logement (2, 6) par moulage par injection ou moulage par soufflage.

8. Une poutre (1) selon n'importe laquelle des revendications précédentes, en combinaison avec une source de gaz (13) adaptée pour gonfler le sac (14) en moins de 10 ms.

9. Une poutre (1) en combinaison avec une source de gaz (13) selon la revendication 8, adaptée pour gonfler le sac (14) en moins de 6 ms.

10. Une poutre (1) selon n'importe laquelle des revendications précédentes, dans laquelle le sac (14) est configuré pour soutenir la poutre (1) dans une direction axiale.

11. Une poutre (1) selon n'importe laquelle des revendications précédentes, dans laquelle le sac (14) est adapté pour être plastiquement déformable.

12. Un procédé de formation d'une poutre structurelle (1) pour véhicule se composant des opérations suivantes :
se procurer un logement (2, 6) comportant une cavité creuse interne (3) ; et un sac gonflable (14) conçu pour gonfler dans la cavité creuse interne (3) du logement (2, 6) de manière à soutenir le logement (2, 6) au moins en partie lorsqu'il est gonflé ;
le logement (2, 6) définit une ou plusieurs ouvertures (18) sur toute sa profondeur, la ou les ouvertures (18) étant dimensionnées de sorte que, lorsque le sac (14) est gonflé par un fluide à une pression comprise entre environ 4 MPa et environ 8 MPa, une partie du sac (14) qui dépasse à travers la ou les ouvertures (18) ait une profondeur de saillie inférieure ou égale à environ la moitié de la plus petite dimension latérale de l'ouverture (18).

13. Un procédé selon la revendication 12, dans lequel l'opération consistant à se procurer un logement (2, 6) suppose de se procurer un logement (2, 6) dans lequel la plus petite dimension latérale de la ou des ouvertures (18) est supérieure ou égale à environ 10 mm.

14. Un procédé selon la revendication 12 ou 13, dans lequel l'opération consistant à se procurer un logement (2, 6) suppose de se procurer un logement (2, 6) dans lequel la plus petite dimension latérale de la ou des ouvertures (18) est inférieure ou égale à environ 30 mm.

15. Un procédé selon n'importe laquelle des revendications 12 à 14, dans lequel l'opération consistant à se procurer un logement (2, 6) suppose de se procurer un logement (2, 6) dans lequel la ou chaque ouverture (18) possède des dimensions telles que lorsque le sac (14) est gonflé avec un fluide à une pression entre environ 5 MPa et environ 8 MPa, une partie du sac (14) qui dépasse de la ou des ouvertures (18) possède une profondeur de saillie inférieure ou égale à environ la moitié de la plus petite dimension de l'ouverture (18).
